# EUROPÄISCHE PATENTSCHRIFT

(11) **EP 3 158 360 B1**
(45) Veröffentlichungstag und Bekanntmachung des Hinweises auf die Patenterteilung: **08.04.2020**
(21) Anmeldenummer: 15720310.0
(22) Anmeldetag: 24.04.2015
(51) Int. Cl.: G01S 15/93, G01S 7/527

(54) **VERFAHREN UND VORRICHTUNG ZUM ERKENNEN EINES GÜLTIGEN ULTRASCHALLSIGNALS IN EINEM ULTRASCHALLSYSTEM EINES FAHRZEUGS**
METHOD AND APPARATUS FOR DETECTING A VALID ULTRASONIC SIGNAL IN AN ULTRASONIC SYSTEM OF A VEHICLE
PROCÉDÉ DE DÉTECTION D'UN SIGNAL ULTRASONORE VALIDE DANS UN SYSTÈME À ULTRASONS D'UN VÉHICULE

(30) Priorität: 23.06.2014 DE 102014211922
(43) Veröffentlichungstag der Anmeldung: 26.04.2017
(73) Patentinhaber: Robert Bosch GmbH, 70442 Stuttgart (DE)
(72) Erfinder: SCHNEIDER, Marcus, 71642 Ludwigsburg (DE); SCHUMANN, Michael, 70597 Stuttgart (DE)
(86) Internationale Anmeldenummer: PCT/EP2015/058925
(87) Internationale Veröffentlichungsnummer: WO 2015/197231

(56) Entgegenhaltungen:
- DE-A1-102011 088 346
- US-A- 5 056 068
- US-A- 5 381 154

## Beschreibung

### Stand der Technik

Die Erfindung betrifft ein Verfahren und eine Vorrichtung zum Erkennen eines gültigen Ultraschallsignals in einem Ultraschallsystem eines Fahrzeugs, sowie ein Ultraschallsystem.

Ultraschallbasierte Messsysteme in Fahrzeugen verwenden typischerweise vier bis sechs Ultraschallsensoren in der Fahrzeugstoßstange. Um eine Fahrzeugumgebung möglichst schnell zu erfassen, sollten die Ultraschallsensoren zeitgleich senden, sodass die Informationen parallel verarbeitet werden können. Dazu benötigen die Ultraschallsensoren spezielle Signalanregungsmuster, damit die reflektierten und gestreuten Ultraschallsignale im Empfangspfad den jeweiligen Ultraschallsensoren korrekt zuordenbar sind und die empfangenen Ultraschallsignale korrekt ausgewertet werden können.

Es ist bekannt für die Verarbeitung der empfangenen Ultraschallsignale signalangepasste Filter, sogenannte Matched Filter zu verwenden. Diese signalangepassten Filter verarbeiten die empfangenen Ultraschallsignale zuverlässig, wenn die gesendeten Ultraschallsignale ideale Signalanregungsmuster aufweisen. Das bedeutet, dass die Signalanregungsmuster orthogonal sind, wodurch Störsignale komplett unterdrückt werden können.

In der Praxis ist eine komplette Unterdrückung von Störsignalen nicht möglich, da die Signalanregungsmuster untereinander nicht orthogonal sind. Außerdem steht für die Ultraschallsensoren eine geringe Bandbreite für das Signalanregungsmuster zur Verfügung. Ultraschallsensoren, die bevorzugt in einer Fahrzeugumgebung eingesetzt werden arbeiten üblicherweise in Resonanznähe, wodurch die Bandbreite sehr gering ist.

Eine mangelnde Matched Filter Unterdrückung von Störsignalen führt zu einer Fehlinterpretation der empfangenen Ultraschallsignale. Empfangene Ultraschallsignale werden somit einem Ultraschallsensor zugeordnet, der das ursprüngliche Ultraschallsignal nicht ausgesendet hat, wodurch falsche Echolaufzeiten angenommen werden. Dadurch können fehlerhafte Ortsinformationen oder Fehlmeldungen, sogenannte false positive, generiert werden.

Das Dokument US 5 056 068 A offenbart zwei parallele Filter, deren Resultat verglichen wird, um zwischen Störsignalen und dem Echo eines Zielobjektes zu unterscheiden.

Das Dokument US 5 381 154 A offenbart eine Anzahl paralleler Filter, die jeweils der Signatur eines Radar-Echos eines bestimmten Ziel-Objektes zugeordnet sind. Das höchste Ausgangssignal zeigt die Erkennung des entsprechenden Objektes an.

Die Aufgabe der Erfindung ist es dem Ultraschallsystem eines Fahrzeugs auswertbare Ultraschallsignale bereitzustellen.

### Offenbarung der Erfindung

Das Verfahren und die Vorrichtung zum Erkennen eines gültigen Ultraschallsignals in einem Ultraschallsystem eines Fahrzeugs umfassen das Erfassen eines Ultraschallsignals mit Hilfe eines Ultraschallsensors. Ein gültiges Ultraschallsignal bedeutet in diesem Zusammenhang, ein reflektiertes oder gestreutes Ultraschallsignal, das von dem Ultraschallsensor empfangen wird, der es auch ausgesendet hat. Das Ultraschallsignal wird mit Hilfe eines ersten Filters und mindestens eines zweiten Filters gefiltert. Der erste Filter erzeugt dabei ein erstes Filtersignal und der zweite Filter ein zweites Filtersignal. Erfindungsgemäß sind der erste Filter und der mindestens zweite Filter im Signalpfad parallel angeordnet, sodass das Ultraschallsignal zeitgleich vom ersten Filter und vom zweiten Filter gefiltert wird. Der erste Filter ist ein an den Ultraschallsensor signalangepasster Filter. Das bedeutet, der erste Filter filtert ein reflektiertes oder gestreutes ultraschallsensoreigenes Ultraschallsignal. Ultraschallsensoreigen bedeutet in diesem Zusammenhang, dass das empfangene reflektierte oder gestreute Ultraschallsignal dem Ultraschallsensor zugeordnet wird, der das auf eine bestimmte Art und Weise signalangeregte Ultraschallsignal ausgesendet hat. Der zweite Filter ist ein an den Ultraschallsensor fehlangepasster Filter. Das bedeutet, der zweite Filter filtert ein ultraschallsensorfremdes Ultraschallsignal.

Ultraschallsensorfremd bedeutet in diesem Zusammenhang, dass das reflektierte oder gestreute Ultraschallsignal von einem anderen Ultraschallsensor als dem Ultraschallsensor, der das signalangeregte Ultraschallsingal ausgesendet hat, empfangen wird. Dieser andere Ultraschallsensor kann Teil des Ultraschallsystem des Fahrzeugs sein. Ultraschallsensorfremd umfasst auch ein beliebiges Störsignal aus der Umgebung des Fahrzeugs. Das erste Filtersignal repräsentiert einen Schwellenwert. Dieser Schwellenwert kann sich mit jedem ersten Filtersignal ändern und ist somit dynamisch. Es wird ein Vergleich des zweiten Filtersignals mit dem Schwellenwert durchgeführt und das Ultraschallssignal als gültiges Ultraschallsignal erkannt bzw. validiert oder plausibilisiert, wenn das zweite Filtersignal unterhalb des Schwellenwerts liegt. Die Auswerteeinheit erzeugt daraufhin ein Ausgangssignal, das das erste Filtersignal umfasst.

Der Vorteil ist hierbei, dass gültige Ultraschallsignale durch den den Filtern nachgelagerten Vergleich auf einfache Weise erkannt bzw. validiert werden können.

In einer Weiterbildung repräsentiert das erste Filtersignal eine erste Amplitude des gefilterten Ultraschallsignals und das zweite Filtersignal eine zweite Amplitude des gefilterten Ultraschallsignals.

In einer weiteren Ausgestaltung repräsentiert das erste Filtersignal einen ersten Korrelationskoeffizienten und das zweite Filtersignal einen zweiten Korrelationskoeffizienten.

Vorteilhaft ist hierbei, dass einfache Größen miteinander verglichen werden können, wodurch die Auswertung der Ultraschallsignale beschleunigt wird.

In einer Weiterbildung ist der mindestens zweite Filter ein signalangepasster Filter für mindestens ein Signalanregungsmuster, das typischerweise in der Fahrzeugumgebung verwendet wird, insbesondere SVA- oder PSX-Signalanregungsmuster. Der Begriff SVA-Signalanregungsmuster umfasst dabei alle Signale, die üblicherweise in einem Totwinkel-Assistent, "side view assist", verwendet werden. Diese SVA-Signale bzw. Signalanregungsmuster können bis zu einer Fahrzeuggeschwindigkeit von 150 km/h erzeugt werden. Der Begriff PSX-Signalanregungsmuster umfasst die Signalanregungsmuster, die üblicherweise zur Parkplatzlokalisierung verwendet werden. Diese PSX-Signale werden bis zu einer Fahrzeuggeschwindigkeit von 40 oder 50 km/h erzeugt.

Der Vorteil ist hierbei, dass ähnliche Signalanregungsmuster wie das Signalanregungsmuster des empfangenen Ultraschallsensors von der Vorrichtung gefiltert werden können.

In einer weiteren Ausgestaltung sind weitere Filter parallel zum ersten Filter und zum zweiten Filter geschaltet. Jeder weitere Filter ist ein signalangepasster Filter für ein Signalanregungsmuster aus der Fahrzeugumgebung, wobei jeder Filter an ein anderes Signalanregungsmuster angepasst ist.

Vorteilhaft ist hierbei, dass unterschiedliche Störsignale erfasst werden und unterdrückt werden können.

In einer Weiterbildung erfasst die Auswerteeinheit mindestens zwei Ultraschallsignale, um das Erkennen des gültigen Ultraschallsignals durchzuführen.

Der Vorteil ist hierbei, dass externe Störungen, wie Wind oder zufällige Störungen, die das Ultraschallsignal beeinflussen einen geringen Einfluss auf das Erkennen des gültigen Ultraschallsignals bzw. die Validierung haben.

Ein erfindungsgemäßes Ultraschallsystem weist insbesondere acht erfindungsgemäße Vorrichtungen auf.

Weitere Vorteile ergeben sich aus der nachfolgenden Beschreibung von Ausführungsbeispielen bzw. aus den abhängigen Patentansprüchen.

### Kurze Beschreibung der Zeichnungen

Die vorliegende Erfindung wird nachfolgend anhand bevorzugter Ausführungsformen und beigefügter Zeichnungen erläutert. Es zeigen:
- Figur 1: eine Vorrichtung zum Erkennen eines gültigen Ultraschallsignals in einem Ultraschallsystem eines Fahrzeugs,
- Figur 2: ein Verfahren zum Erkennen eines gültigen Ultraschallsignals in einem Ultraschallsystem eines Fahrzeugs und
- Figur 3: ein Beispiel zum Erkennen eines gültigen Ultraschallsignals in einem Ultraschallsystem eines Fahrzeugs bei dem die Amplituden der Filtersignale ausgewertet werden.

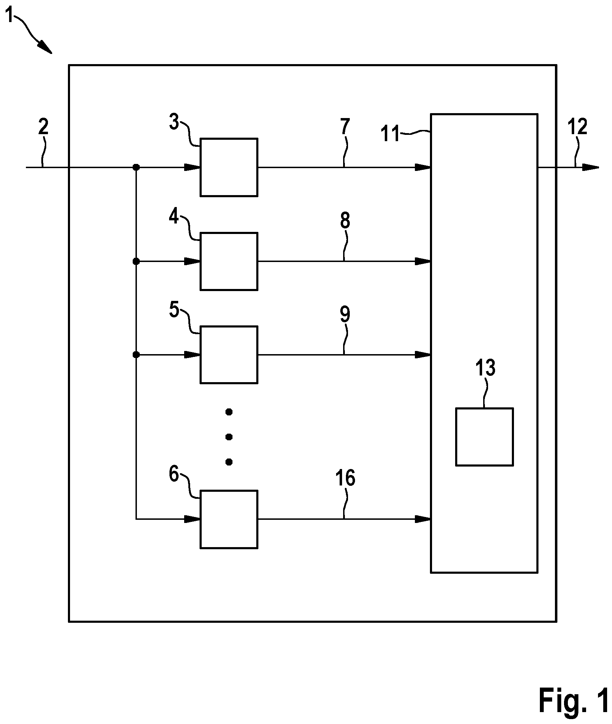

Figur 1 zeigt eine Vorrichtung 1 zum Erkennen eines gültigen Ultraschallsignals in einem Ultraschallsystem eines Fahrzeugs. Die Vorrichtung 1 weist einen ersten Filter 3 und mindestens einen zweiten Filter 4 auf, die im Signalpfad parallel zueinander angeordnet sind, sodass ein Ultraschallsignal 2 gleichzeitig vom ersten Filter 3 und vom zweiten Filter 4 verarbeitet werden kann. Der erste Filter 3 ist an das Signalanregungsmuster der Ultraschallsignale des Ultraschallssensors des Fahrzeugs angepasst, d. h. der erste Filter 3 filtert reflektierte oder gestreute ultraschallsensoreigene Ultraschallsignale, die der Ultraschallsensor des Ultraschallsystems ausgesendet hat. Der zweite Filter 4 ist an Ultraschallsignale angepasst, die Signalanregungsmuster aufweisen, die nicht vom Ultraschallsensor, der das Ultraschallsignal empfängt, ausgesendet wurden. Das bedeutet der zweite Filter 4 ist ein an den Ultraschallsensor fehlangepasster Filter, d. h. der zweite Filter 4 filtert sogenannte Fremdsignale oder Störsignale. Der erste Filter 3 erzeugt ein erstes Filtersignal 7 und der zweite Filter 4 erzeugt ein zweites Filtersignal 8. Des Weiteren weist die Vorrichtung 1 eine Auswerteeinheit 11 auf, die das erste Filtersignal 7 und mindestens das zweite Filtersignal 8 erfasst. Die Auswerteeinheit 11 erkennt das gültige Ultraschallsignal und erzeugt ein Ausgangssignal 12, das das erste Filtersignal 7 ausgibt oder unterdrückt.

Optional weist die Auswerteeinheit 11 einen Speicher 13 auf, in dem das erste Filtersignal 7 und das zweite Filtersignal 8 über mehrere Zyklen von Ultraschallsignalen 2 gespeichert werden können, sodass das Ausgangssignal 12, das von der Auswerteeinheit 11 erzeugt wird, auf mehreren Ultraschallsignalen bzw. mehreren dazu gespeicherten Filtersignalen basiert.

In einem weiteren Ausführungsbeispiel ist mindestens ein dritter Filter 5 parallel zum ersten Filter 3 und zum zweiten Filter 4 angeordnet. Dabei ist der dritte Filter 5 an ein anderes Signalanregungsmuster angepasst als der erste Filter 3 und der zweite Filter 4, d. h. jeder Filter weist eine Anpassung an ein anderes Signalanregungsmuster auf, d. h. die Signalanregungsmuster der Ultraschallsignale, die von der Vorrichtung gefiltert werden können, sind unterschiedlich. Häufig ist das Wissen über Signalanregungsmuster, die in der zu befahrenen Umgebung verwendet werden nur unzureichend vorhanden. Daher werden Filter, die an ultraschallsensorfremde Signalanregungsmuster angepasst sind, an die Signalanregungsmuster angepasst, die mit einer hohen Wahrscheinlichkeit in einer Fahrzeugumgebung auftreten, beispielsweise im Fahrzeugmarkt stark verbreitete Systeme oder Signalanregungsmuster, die von den Ultraschallsensoren des eigenen Ultraschallsystems verwendet werden, wie beispielsweise SVA -Signale, die bei der Totwinkel-Assistentfunktion oder PSX-Signale, die bei der Parkplatzlokalisierungsfunktion angewendet werden. Es können aber auch die Signalanregungsmuster für das Parken und Manövrieren verwendet werden, die bei geringeren Geschwindigkeiten bis ungefähr 20 km/h auftreten. Im Allgemeinen treten die SVA-Signale und die PSX-Signale in der Fahrzeugumgebung häufiger auf, da das Fahrzeug meist schneller als 20 km/h fährt.

In einem weiteren Ausführungsbeispiel weist die Vorrichtung mehr als drei Filter auf, da aufgrund der hohen Anzahl von möglichen Störsignalen es sinnvoll ist möglichst viele Filterkanäle auszuwerten. Steht nur wenig Rechenzeit zur Verfügung, so sollten Signalanregungsmuster in den signalfremden Filtern gewählt werden, die möglichst ähnliche Charakteristika aufweisen wie das gesuchte bzw. systemeigene Ultraschallsignal, beispielsweise im selben Frequenzband.

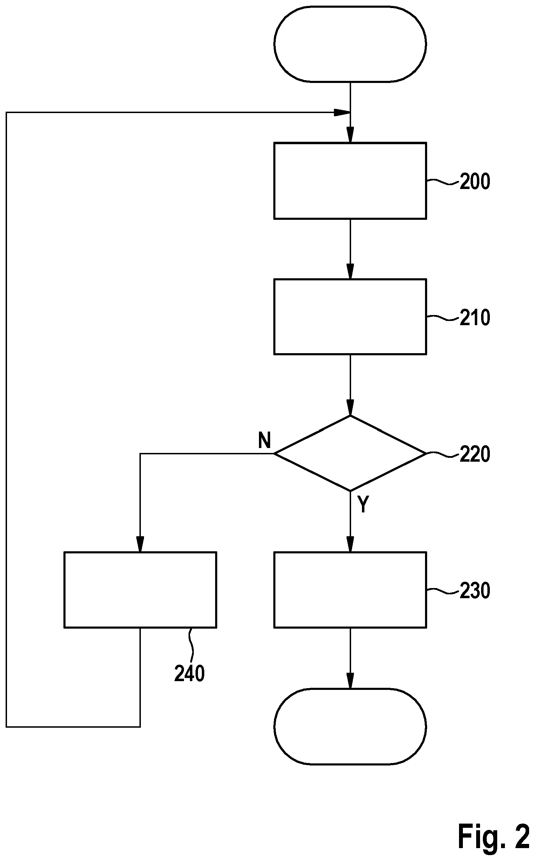

Figur 2 zeigt ein Verfahren zum Erkennen eines gültigen Ultraschallsignals in einem Ultraschallsystem eines Fahrzeugs. Das Verfahren startet mit Schritt 200, indem ein Ultraschallsignal mit Hilfe eines Ultraschallsensors erfasst wird. In einem folgenden Schritt 210 wird das Ultraschallsignal gleichzeitig mit Hilfe eines ersten Filters und mindestens eines zweiten Filters gefiltert, da der erste Filter und der mindestens zweite Filter im Signalpfad parallel angeordnet sind. Am Ausgang des ersten Filters wird dabei ein erstes Filtersignal erzeugt und am Ausgang des zweiten Filters wird ein zweites Filtersignal erzeugt. Mit Hilfe der Auswerteeinheit wird in einem folgenden Schritt 220 das zweite Filtersignal mit dem ersten Filtersignal verglichen. Das erste Filtersignal stellt dabei einen dynamischen Schwellenwert dar, der sich nach jedem gefilterten Ultraschallsignal ändert oder ändern kann. Liegt das zweite Filtersignal unterhalb des Schwellenwerts, so wird das erste Filtersignal als ein reflektiertes oder gestreutes Ultraschallsignal angesehen, das von dem empfangenden Ultraschallsensor ausgesendet wurde, d. h. es handelt sich um ein ultraschallsensoreigenes Ultraschallsignal. In einem folgenden Schritt 230 wird das erste Filtersignal als valides bzw. gültiges Ultraschallsignal erkannt, das dem Ultraschallsensor des Fahrzeugs zugeordnet wird und auswertbar ist. Am Ausgang der Auswerteeinheit wird daher das erste Filtersignal als Ausgangssignal ausgegeben. Dadurch kann das erste Filtersignal mit einer weiteren nicht gezeigten Vorrichtung ausgewertet werden, beispielsweise zur Abstandsbestimmung. Liegt das zweite Filtersignal oberhalb des Schwellenwerts oder entspricht dem Wert des Schwellenwerts, so handelt es sich bei dem ersten Filtersignal um ein ungültiges Ultraschallsignal, d. h. es wird als ein ultraschallsensorfremdes Ultraschallsignal gewertet. Das bedeutet, dass das erste Filtersignal nicht zuverlässig ausgewertet werden kann, da Fremdsignale vorhanden sind, die die weitere Auswertung beeinflussen würden. Daher wird in einem folgenden Schritt 240 das erste Filtersignal unterdrückt, d. h. die Vorrichtung gibt kein Ausgangssignal aus und das Verfahren wird beendet oder neu gestartet.

In einem weiteren Ausführungsbeispiel kann es vorkommen, dass das Übersprechen aufgrund der Filtereigenschaften nicht exakt zeitgleich erfolgt, sondern leicht zeitversetzt. Daher ist im ersten Filter ein Verzögerungsglied voroder nachgeschaltet, der den Zeitversatz kompensiert.

In einem weiteren Ausführungsbeispiel entspricht der Schwellenwert einem auftretenden Maximum des zweiten Filterkanals während einem bestimmten Zeitintervall.

Da einzelne Ultraschallsignale durch externe Störungen, wie Wind oder zufällige Interferenzen sporadisch eine geringe Amplitude aufweisen können, wird optional im Speicher der Auswerteeinheit das erste Filtersignal für mehrere Ultraschallsignale gespeichert, sodass ein Zyklus von Ultraschallsignalen ausgewertet werden kann und das Erkennen des gültigen Ultraschallsignals basierend auf gemittelten Werten durchgeführt wird.

In einem weiteren Ausführungsbeispiel repräsentiert das erste Filtersignal eine erste Amplitude des gefilterten Ultraschallsignals und das zweite Filtersignal eine zweite Amplitude des gefilterten Ultraschallsignals.

In einem weiteren Ausführungsbeispiel repräsentiert das erste Filtersignal einen ersten Korrelationskoeffizienten und das zweite Filtersignal einen zweiten Korrelationskoeffizienten.

Optional repräsentiert das erste Filtersignal die erste Amplitude des gefilterten Ultraschallsignals und den ersten Korrelationskoeffizienten und das zweite Filtersignal die zweite Amplitude des gefilterten Ultraschallsignals und den zweiten Korrelationskoeffizienten.

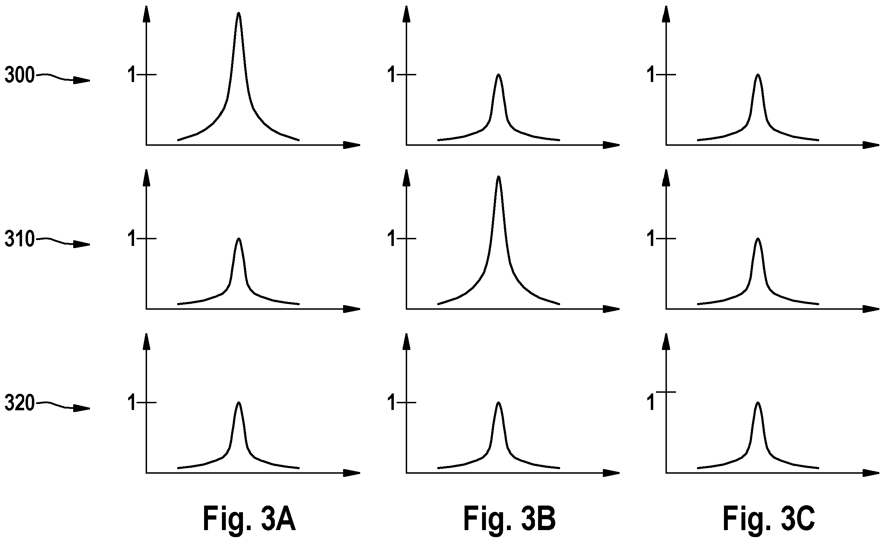

Figur 3 zeigt ein Beispiel zum Erkennen eines gültigen Ultraschallsignals in einem Ultraschallsystem eines Fahrzeugs bei dem die Amplituden der Filtersignale ausgewertet werden. Es handelt sich hierbei um eine Vorrichtung mit drei Filtern. Der erste Filter ist auf ein ultraschallsensoreigenes Ultraschallsignal angepasst, beispielsweise ein linearer Gleitsinus mit einer Startfrequenz von 45 kHz, einer Stoppfrequenz von 54 kHz und einer Dauer t0. Der zweite Filter und der dritte Filter sind jeweils auf den Ultraschallsensor fehlangepasst, wobei die Signalanregung unterschiedlich ist. Die Reihe 300 zeigt das erste Filtersignal, die Reihe 310 das zweite Filtersignal und die Reihe 320 das dritte Filtersignal für verschiedene Fälle A, B und C. Für den Fall A ist die Amplitude des ersten Filtersignals wesentlich größer als die Amplitude des zweiten Filtersignals und des dritten Filtersignals. In der Auswerteeinheit wird somit das erste Filtersignal als gültiges ultraschallsensoreigenes Ultraschallsignal erkannt bzw. bewertet und als Ausgangsignal der Auswerteeinheit ausgegeben. Im Fall B ist die Amplitude des zweiten Filtersignals wesentlich größer als die Amplitude des ersten Filtersignals und des dritten Filtersignals. Das bedeutet es wurde am Eingang der Vorrichtung ein Ultraschallsignal erfasst, das von der Auswerteeinheit als Störsignal bewertet wird. Die Auswerteeinheit unterdrückt das erste Filtersignal und gibt kein Ausgangssignal aus. Im Fall C sind die Amplituden des ersten Filtersignals, des zweiten Filtersignals und des dritten Filtersignals ungefähr gleich groß. Es wurde somit kein gültiges Ultraschallsignal von der Vorrichtung empfangen, das zuverlässig ausgewertet werden könnte. Daher unterdrückt die Auswerteeinheit das erste Filtersignal und gibt kein Ausgangssignal aus.

## Patentansprüche

1. Verfahren zum Erkennen eines gültigen Ultraschallsignals (2) in einem Ultraschallsystem eines Fahrzeugs mit den Schritten:
• Erfassen (200) eines Ultraschallsignals (2) mit Hilfe eines Ultraschallsensors,
• Filtern (210) des Ultraschallsignals (2) mit Hilfe eines ersten Filters (3) und mindestens eines zweiten Filters (4), wobei der erste Filter (3) ein erstes Filtersignal (7) und der zweite Filter (4) ein zweites Filtersignal (8) erzeugt,
• wobei beim Verfahrensschritt des Filterns (210) das Ultraschallsignal (2) gleichzeitig vom ersten Filter (3) und vom zweiten Filter (4) gefiltert wird,
∘ wobei der erste Filter (3) ein an ein von dem Ultraschallsensor ausgesendetes Ultraschallsignal signalangepasster Filter ist,
∘ wobei der zweite Filter (4) ein an ein von dem Ultraschallsensor ausgesendetes Ultraschallsignal fehlangepasster und folglich ein an ein ultraschallsensorfremdes Ultraschallsignal signalangepasster Filter ist,
• das erste Filtersignal (7) einen Schwellenwert repräsentiert und
• das Verfahren die weiteren Schritte umfasst:
• Vergleichen (220) des zweiten Filtersignals (8) mit dem Schwellenwert und
• Erkennen des gültigen Ultraschallsignals (2) und Ausgeben (230) des gültigen Ultraschallsignals (2) als Ausgangssignal (12), wenn das zweite Filtersignal kleiner als der Schwellenwert ist.

2. Verfahren nach Anspruch 1, **dadurch gekennzeichnet, dass** das erste Filtersignal (7) eine erste Amplitude des gefilterten Ultraschallsignals repräsentiert und das zweite Filtersignal (8) eine zweite Amplitude des gefilterten Ultraschallsignals repräsentiert.

3. Verfahren nach Anspruch 1, **dadurch gekennzeichnet, dass** das erste Filtersignal (7) einen ersten Korrelationskoeffizienten repräsentiert und das zweite Filtersignal (8) einen zweiten Korrelationskoeffizienten repräsentiert.

4. Vorrichtung (1) zum Erkennen eines gültigen Ultraschallsignals (2) in einem Ultraschallsystem eines Fahrzeugs mit
• mindestens einem Ultraschallsensor,
• einer Auswerteeinheit (11),
• einem ersten Filter (3), der ein erstes Filtersignal (7) erzeugt und
• mindestens einem zweiten Filter (4), der ein zweites Filtersignal (8) erzeugt,
wobei
• der erste Filter (3) und der zweite Filter (4) im Signalpfad parallel angeordnet sind, sowie
• der erste Filter (3) ein an ein von dem Ultraschallsensor ausgesendetes Ultraschallsignal signalangepasster Filter ist, und
• der zweite Filter (4) ein an ein von dem Ultraschallsensor ausgesendetes Ultraschallsignal fehlangepasster und folglich ein an ein ultraschallsensorfremdes Ultraschallsignal signalangepasster Filter ist, ∘ wobei das erste Filtersignal (7) einen Schwellenwert repräsentiert, und
• die Auswerteeinheit (11) in Abhängigkeit eines Vergleichs des zweiten Filtersignals (7) mit dem Schwellenwert das Ultraschallsignal (2) als gültig erkennt, wenn das zweite Filtersignal (8) kleiner als der Schwellenwert ist und das gültige Ultraschallsignal als Ausgangssignal (12) ausgibt.

5. Vorrichtung (1) nach Anspruch 4, **dadurch gekennzeichnet, dass** das erste Filtersignal (7) eine erste Amplitude des gefilterten Ultraschallsignals repräsentiert und das zweite Filtersignal (8) eine zweite Amplitude des gefilterten Ultraschallsignals repräsentiert.

6. Vorrichtung (1) nach Anspruch 4, **dadurch gekennzeichnet, dass** das erste Filtersignal (7) einen ersten Korrelationskoeffizienten repräsentiert und das zweite Filtersignal (8) einen zweiten Korrelationskoeffizienten repräsentiert.

7. Vorrichtung (1) nach einem der Ansprüche 4 bis 6, **dadurch gekennzeichnet, dass** der mindestens zweite Filter (4) ein signalangepasster Filter für mindestens ein ultraschallsensorfremdes Signalanregungsmuster ist, das typischerweise in der Fahrzeugumgebung verwendet wird, insbesondere SVA oder PSX-Signalanregungsmuster.

8. Vorrichtung (1) nach einem der Ansprüche 4 bis 7, **dadurch gekennzeichnet, dass** weitere Filter zum ersten Filter (3) und zum zweiten Filter (4) parallel geschaltet sind und jeder weitere Filter jeweils ein signalangepasster Filter für ein Signalanregungsmuster ist, das typischerweise in der Fahrzeugumgebung verwendet wird, wobei die Signalanregungsmuster für jeden Filter unterschiedlich sind.

9. Vorrichtung (1) nach einem der Ansprüche 4 bis 8, **dadurch gekennzeichnet, dass** die Auswerteeinheit (6) mindestens zwei Ultraschallsignale (2) erfasst, um das Erkennen des gültigen Ultraschallsignals durchzuführen.

10. Ultraschallsystem mit mehreren Vorrichtungen, insbesondere acht Vorrichtungen, nach einem der Ansprüche 4 bis 9.

## Claims

1. Method for detecting a valid ultrasonic signal (2) in an ultrasonic system of a vehicle, having the steps of:
• capturing (200) an ultrasonic signal (2) using an ultrasonic sensor,
• filtering (210) the ultrasonic signal (2) using a first filter (3) and at least one second filter (4), wherein the first filter (3) generates a first filter signal (7) and the second filter (4) generates a second filter signal (8),
• wherein
the method step of filtering (210) involves the ultrasonic signal (2) being filtered by the first filter (3) and by the second filter (4) at the same time,
∘ wherein the first filter (3) is a filter that is signal-matched to an ultrasonic signal transmitted by the ultrasonic sensor,
∘ wherein the second filter (4) is a filter that is mismatched to an ultrasonic signal transmitted by the ultrasonic sensor and therefore signal-matched to an ultrasonic signal alien to the ultrasonic sensor,
• the first filter signal (7) represents a threshold value and
• the method comprises the further steps of:
• comparing (220) the second filter signal (8) with the threshold value and
• detecting the valid ultrasonic signal (2) and outputting (230) the valid ultrasonic signal (2) as an output signal (12) if the second filter signal is below the threshold value.

2. Method according to Claim 1, **characterized in that** the first filter signal (7) represents a first amplitude of the filtered ultrasonic signal and the second filter signal (8) represents a second amplitude of the filtered ultrasonic signal.

3. Method according to Claim 1, **characterized in that** the first filter signal (7) represents a first correlation coefficient and the second filter signal (8) represents a second correlation coefficient.

4. Apparatus (1) for detecting a valid ultrasonic signal (2) in an ultrasonic system of a vehicle, having
• at least one ultrasonic sensor,
• an evaluation unit (11),
• a first filter (3), which generates a first filter signal (7), and
• at least one second filter (4), which generates a second filter signal (8),
wherein
• the first filter (3) and the second filter (4) are arranged in parallel in the signal path, and
• the first filter (3) is a filter that is signal-matched to an ultrasonic signal transmitted by the ultrasonic sensor, and
• the second filter (4) is a filter that is mismatched to an ultrasonic signal transmitted by the ultrasonic sensor and therefore signal-matched to an ultrasonic signal alien to the ultrasonic sensor,
∘ wherein the first filter signal (7) represents a threshold value, and
• the evaluation unit (11) takes a comparison of the second filter signal (7) with the threshold value as a basis for detecting the ultrasonic signal (2) as valid if the second filter signal (8) is below the threshold value and outputting the valid ultrasonic signal as an output signal (12).

5. Apparatus (1) according to Claim 4, **characterized in that** the first filter signal (7) represents a first amplitude of the filtered ultrasonic signal and the second filter signal (8) represents a second amplitude of the filtered ultrasonic signal.

6. Apparatus (1) according to Claim 4, **characterized in that** the first filter signal (7) represents a first correlation coefficient and the second filter signal (8) represents a second correlation coefficient.

7. Apparatus (1) according to one of Claims 4 to 6, **characterized in that** the at least one second filter (4) is a signal-matched filter for at least one signal excitation pattern that is alien to the ultrasonic sensor and typically used in the vehicle surroundings, in particular an SVA or PSX signal excitation pattern.

8. Apparatus (1) according to one of Claims 4 to 7, **characterized in that** further filters are connected in parallel with the first filter (3) and with the second filter (4), and each further filter is a respective signal-matched filter for a signal excitation pattern typically used in the vehicle surroundings, wherein the signal excitation patterns are different for each filter.

9. Apparatus (1) according to one of Claims 4 to 8, **characterized in that** the evaluation unit (6) captures at least two ultrasonic signals (2) in order to perform the detection of the valid ultrasonic signal.

10. Ultrasonic system having multiple apparatuses, in particular eight apparatuses, according to one of Claims 4 to 9.

## Revendications

1. Procédé de reconnaissance d'un signal ultrasonore (2) valide dans un système d'ultrasons d'un véhicule, comprenant les étapes :
* acquisition (200) d'un signal ultrasonore (2) à l'aide d'un détecteur d'ultrasons,
* filtrage (210) du signal ultrasonore (2) à l'aide d'un premier filtre (3) et d'au moins un deuxième filtre (4), le premier filtre (3) générant un premier signal de filtre (7) et le deuxième filtre (4) un deuxième signal de filtre (8),
* à l'étape de filtrage (210), le signal ultrasonore (2) étant filtré simultanément par le premier filtre (3) et par le deuxième filtre (4),
∘ le premier filtre (3) étant un filtre adapté au signal ultrasonore émis par le détecteur d'ultrasons,
∘ le deuxième filtre (4) étant un filtre désadapté au signal ultrasonore émis par le détecteur d'ultrasons et, par conséquent, un filtre adapté à un signal ultrasonore externe au détecteur d'ultrasons,
* le premier signal de filtre (7) représentant une valeur de seuil
* le procédé comprenant les étapes supplémentaires :
* comparaison (220) du deuxième signal de filtre (8) à la valeur de seuil et
* reconnaissance du signal ultrasonore (2) valide et délivrance (230) du signal ultrasonore (2) valide en tant que signal de sortie (12) lorsque le deuxième signal de filtre est inférieur à la valeur de seuil.

2. Procédé selon la revendication 1, **caractérisé en ce que** le premier signal de filtre (7) représente une première amplitude du signal ultrasonore filtré et le deuxième signal de filtre (8) représente une deuxième amplitude du signal ultrasonore filtré.

3. Procédé selon la revendication 1, **caractérisé en ce que** le premier signal de filtre (7) représente un premier coefficient de corrélation et le deuxième signal de filtre (8) représente un deuxième coefficient de corrélation.

4. Dispositif (1) de reconnaissance d'un signal ultrasonore (2) valide dans un système d'ultrasons d'un véhicule, comprenant
* au moins un détecteur d'ultrasons,
* une unité d'interprétation (11),
* un premier filtre (3) qui génère un premier signal de filtre (7) et
* au moins un deuxième filtre (4) qui génère un deuxième signal de filtre (8),
* le premier filtre (3) et le deuxième filtre (4) étant disposés en parallèle dans le trajet du signal,
* le premier filtre (3) étant un filtre adapté au signal ultrasonore émis par le détecteur d'ultrasons, et
* le deuxième filtre (4) étant un filtre désadapté au signal ultrasonore émis par le détecteur d'ultrasons et, par conséquent, un filtre adapté à un signal ultrasonore externe au détecteur d'ultrasons,
∘ le premier signal de filtre (7) représentant une valeur de seuil
* l'unité d'interprétation (11), en fonction d'une comparaison du deuxième signal de filtre (7) à la valeur de seuil, reconnaissant le signal ultrasonore (2) comme étant valide lorsque le deuxième signal de filtre (8) est inférieur à la valeur de seuil et délivrant le signal ultrasonore valide en tant que signal de sortie (12).

5. Dispositif (1) selon la revendication 4, **caractérisé en ce que** le premier signal de filtre (7) représente une première amplitude du signal ultrasonore filtré et le deuxième signal de filtre (8) représente une deuxième amplitude du signal ultrasonore filtré.

6. Dispositif (1) selon la revendication 4, **caractérisé en ce que** le premier signal de filtre (7) représente un premier coefficient de corrélation et le deuxième signal de filtre (8) représente un deuxième coefficient de corrélation.

7. Dispositif (1) selon l'une des revendications 4 à 6, **caractérisé en ce que** l'au moins un deuxième filtre (4) est un filtre adapté au signal pour au moins un modèle d'excitation par signal externe au détecteur d'ultrasons qui est habituellement utilisé dans l'environnement des véhicules, notamment un modèle d'excitation par signal SVA ou PSX.

8. Dispositif (1) selon l'une des revendications 4 à 7, **caractérisé en ce que** des filtres supplémentaires sont branchés en parallèle du premier filtre (3) et du deuxième filtre (4) et chaque filtre supplémentaire est respectivement un filtre adapté au signal pour un modèle d'excitation par signal qui est habituellement utilisé dans l'environnement des véhicules, le modèle d'excitation par signal étant différent pour chaque filtre.

9. Dispositif (1) selon l'une des revendications 4 à 8, **caractérisé en ce que** l'unité d'interprétation (6) acquiert au moins deux signaux ultrasonores (2) en vue d'effectuer la reconnaissance du signal ultrasonore valide.

10. Système d'ultrasons comprenant plusieurs dispositifs, notamment huit dispositifs selon l'une des revendications 4 à 9.
